# EUROPEAN PATENT APPLICATION

(11) **EP 2 797 258 A1**
(43) Date of publication of application: **29.10.2014**
(21) Application number: 13305553.3
(22) Date of filing: 26.04.2013
(51) Int. Cl.: H04L 12/24, H04L 12/46, H04L 12/54, H04L 12/701

(54) **Lan-VPLS stitching method, system and computer readable medium**

(71) Applicant: ALCATEL LUCENT, 92100 Boulogne-Billancourt (FR)
(72) Inventor: Fagadar Cosma, Mihai, 2000 Antwerpen (BE); Van Elshocht, Walter, 2550 Waarloos (BE); Gridin, Vladyslav, 2018 Antwerpen (BE)
(74) Representative: Jacobs, Bart

(57) **Abstract**

The present invention is related to a Local Area Network (LAN) to Virtual Private LAN Service (VPLS) stitching method, system, and computer readable medium.

According to the method of the invention, the provider edge routers may be queried and required information for deploying a missing VPLS service on the target router may be obtained, allowing the LAN-VPLS stitching in an automated manner without an operator of the cloud management system requiring knowledge of the types of VPLS services involved in the stitching process.

## Description

The present invention is related to a Local Area Network (LAN) to Virtual Private LAN Service (VPLS) stitching method, system and computer readable medium. More in particular, the present invention is related to a method for connecting a LAN to a Virtual Private Network (VPN) via a Provider Edge (PE) router using a layer 2 Virtual Private LAN service (VPLS). It is further related to a cloud management system that is configured to implement the method and to a corresponding computer readable medium. The method, device and medium can be extended to cover the situation in which a plurality of LANs is connected to a VPN via corresponding PE routers using a layer 2 VPLS to effectively form a single Ethernet LAN. Here, the functionality to implement the method in accordance with the present invention can be distributed as a unit that is part of the cloud management system or as part of driver software for existing cloud management systems, such as network driver software.

Using VPLS, Ethernet based multipoint to multipoint communication can be provided over Internet Protocol (IP) / MultiProtocol Label Switching (MPLS) networks. It allows two different LANs, for instance proprietary of company A, to be connected in a secure manner using the infrastructure offered by an underlying physical network of a Service Provider (SP). Here, the VPN is a logical network that is managed using a cloud management system.

Layer 2 VPLS services allow multiple Ethernet LANs to be grouped together and handled as a single Ethernet LAN across the SP network. To obtain the required security such that information exchanged between the two LANs is kept confidential while on the network of the Service Provider, encapsulation/decapsulation and encryption technologies are used. Typically, the cloud management system is used to manage the VPN and its related VPLS services.

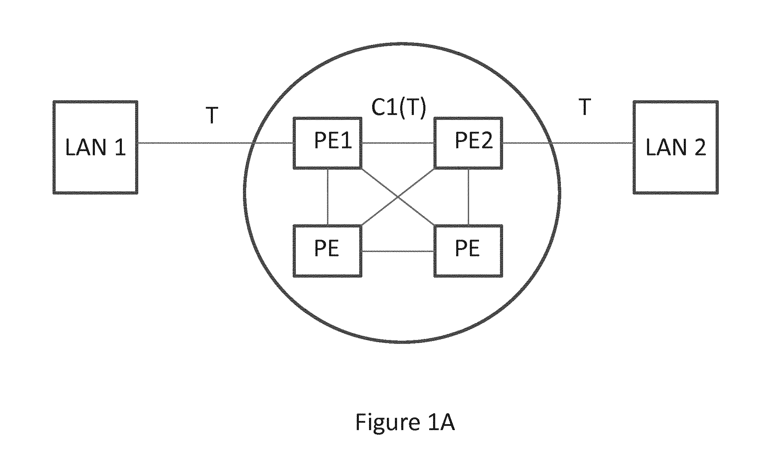

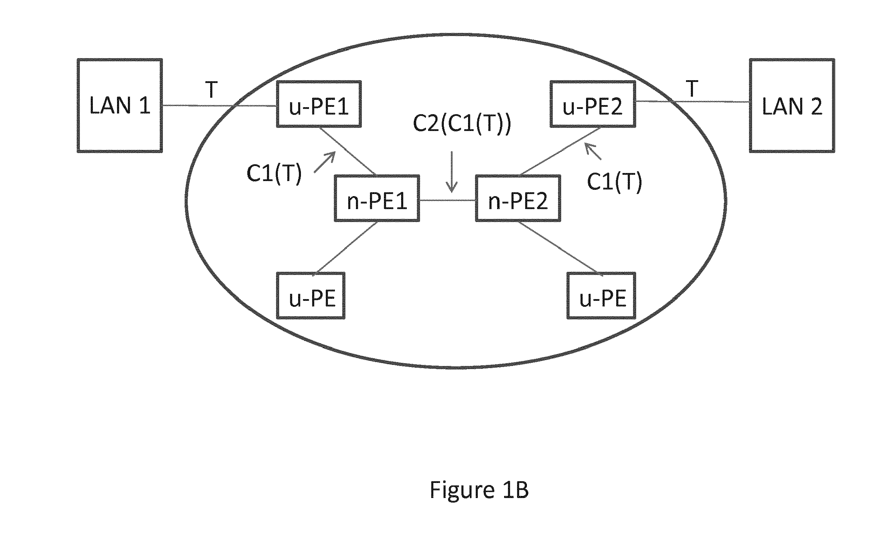

Figures 1A and 1B illustrate two known configurations for connecting two LANs using VPLS. In figure 1A, the so-called native configuration or operating model is shown, which is characterized by a flat architecture and which is standardized under IETF RFCs 4761/4762. The SP network in this configuration comprises a plurality of PE routers on which a VPLS service is deployed that provides the encapsulation of packets coming into the SP network or the decapsulation of packets leaving the SP network. Furthermore, the PE routers allow the routing of the packets. All of the PE routers in the SP network are connected to each other in a full mesh type configuration using pseudowires.

In figure 1A, traffic (T) from LAN1 will be encapsulated by the VPLS service on PE1 to form C1(T). This same router will transmit the encapsulated traffic to PE2. The VPLS service on this router will de-encapsulate the traffic back into T, after which the router will send the same to LAN2.

In the native configuration of figure 1, a full mesh is required between the different PEs. Such configurations are therefore difficult to scale. To address this issue, a hierarchical type of VPLS (H-VPLS), as shown in figure 1B and standardized under IEEE Std. 802.1ah, has been developed in the art. In this configuration, the so-called Provider Backbone Bridging VPLS (PBB-VPLS), the SP network comprises user-faced PEs (u-PE) and network-faced PEs (n-PE). In this type of configuration, two different types of VPLS instances are deployed to ensure a cascading of encapsulation and decapsulation.

In figure 1B, traffic (T) from LAN1 will first be encapsulated by I-VPLS on u-PE1 to form C1(T). This same router will transmit the encapsulated traffic to n-PE1, where it will be encapsulated by B-VPLS to form C2(C1(T). Once received by n-PE2, the B-VPLS instance on this router will de-encapsulate the traffic back into C1(T) after which the router will send the same to u-PE2. The I-VPLS instance deployed on this last router will de-encapsulate the traffic back into T, after which the router will send the same to LAN2.

The double encapsulation allows multiple I-VPLS instances to make use of the same B-VPLS instance while maintaining full security between different PBB-VPLS instances. The full mesh requirement of figure 1A does therefore only apply to the network of n-PEs, allowing a higher scalability to be achieved.

Each VPLS instance is characterized by its own unique VPLS identifier (VPLS_ID). Furthermore, each PE router has its own address, such as a router IP address (ROUTER_IP). Such data is provided by the cloud management system to the customer as part of the customer-side configuration prior to connection to the VPN.

Typically, a SP provides a plurality of VPLS instances to be used by one or more customers. To use a specific VPLS service, the costumer must connect its LAN to the VPN using a specific VPLS service in the form of a Service Access Point (SAP). This process is referred to as LAN-VPLS stitching. If a customer wishes to connect two different LANs, each LAN must be separately connected using the same VPLS_ID.

If a customer wishes to connect to the VPLS network, the network operator of the LAN must select one among the VPLS services available in the network. Subsequently, the cloud management system must ensure that the LAN is connected to the VPN using the VPLS service having the selected VPLS_ID. To this end, an operator of the cloud management system should determine which type of VPLS service, i.e. native or PBB, is associated with the selected VPLS_ID. Secondly, he must ensure that this service is deployed on the PE router corresponding the LAN to be connected. If such service is not deployed, a VPLS service must be instantiated. This process depends on the type of VPLS service involved. For instance, in a PBB-VPLS configuration there are two different VPLS services that are needed, i.e. I-VPLS and B-VPLS, each requiring different configuration parameters.

It often occurs that the owner of the VPN is different from the SP. In other words, the operator of the cloud management system is not employed by the SP, despite that the operator needs detailed information about the types of VPLS services that are offered by the SP. Moreover, the network configuration of a SP may change rather frequent. This would require regular updates of the SP network configuration to the cloud management system. In short, the information needed by the cloud management system or its operator to setup the VPLS service to connect the LAN(s) to the VPN may be difficult or cumbersome to obtain. Secondly, this information and the corresponding installation is of a highly technical nature, requiring qualified personnel.

An object of the present invention is to provide a solution in which the abovementioned problems do not occur or at least occur to a lesser extent. More in particular, the invention is related to providing a solution in which the operator of the cloud management system need not be aware of the specifics of the VPLS services that are being facilitated by the SP.

According to a first aspect, this object is achieved with a method according to claim 1.

The method according to the invention comprises the cloud management system providing a list of available VPLS services for connecting the LAN to the VPN along with an address of the PE router, wherein each VPLS service has a different VPLS identifier (VPLS_ID). The operator of the LAN network will then choose a VPLS service from among the list of VPLS services. This process may also be performed in an automated manner. After this selecting process, the cloud management system determines whether a suitable VPLS service is deployed on the PE router. Here, a suitable VPLS service should be interpreted as a VPLS service that would allow the LAN to be connected to the VPN.

If it is determined that a suitable VPLS service is deployed, the cloud management system generates a Service Access Point (SAP) within the PE router to connect the LAN to the VPN network. However, if it is determined that a suitable VPLS service is not deployed, the cloud management system will obtain a list of all the VPLS services that are deployed on other PE routers within the underlying physical network of the SP that are associated with the chosen VPLS service. The cloud management system will then determine whether a suitable VPLS service is deployed on another PE router based on the obtained list.

If it is determined that a suitable VPLS service is on another PE router, the cloud management system will obtain deployment information from the another PE router, and will deploy the suitable VPLS service on the PE router using the deployment information and it will subsequently generate the Service Access Point (SAP) within the PE router to connect the LAN to the VPN network.

According to the invention, the cloud management system will obtain the information about the type of VPLS service associated with the selected VPLS_ID by investigating the PEs that are associated with a particular VPLS_ID. In addition, the cloud management system will ensure that the correct VPLS service will be deployed on the relevant PE router using the deployment information. Consequently, the operator of the cloud management system does not need to know anything about the specific details of the VPLS service that was requested by the operator of the LAN.

This invention particularly applies to VPNs that facilitate VPLS services of different types such as the aforementioned native and Provider Back Bone (PBB) VPLS services.

The determining that a suitable VPLS service is deployed on the PE router preferably comprises determining that an operating model of the VPLS service to be used for connecting the LAN to the VPN network is a native operating model when a native VPLS service is deployed on the PE router and/or determining that an operating model of the VPLS service to be used for connecting the LAN to the VPN network is a PBB operating model when an I-VPLS service is deployed on the PE router. The deployment of an I-VPLS service is indicative that a PBB service is running and that this service is accessible using the PE router assigned to the LAN. Alternatively, a native VPLS service may already be deployed. In both cases, the cloud management system need not carry out further tasks than generating the SAP to allow connection between LAN and VPN.

In the case where a suitable VPLS service could not be identified, the cloud management system could look at other PE routers within the SP network that are associated with the VPLS_ID selected. It could then determine whether a suitable VPLS service is deployed on another PE router by determining that an operating model of the VPLS service to be used for connecting the LAN to the VPN is a native operating model when no I-VPLS service and no B-VPLS service is deployed on any of the other PE routers. In that case, the cloud management system may deploy a native VPLS service on the PE router and may subsequently generate the Service Access Point (SAP) within the PE router to connect the LAN to the VPN network.

Alternatively or additionally, determining whether a suitable VPLS service is deployed on another PE router may comprise determining that an operating model of the VPLS service to be used for connecting the LAN to the VPN is a PBB operating model when an I-VPLS service is deployed on any of the other PE router. In this case the obtaining of deployment information from the another PE router comprises obtaining information for connecting an I-VPLS service to a B-VPLS service from the I-VPLS service on the another PE router. The cloud management system may then be further configured to deploy an I-VPLS service on the PE router using the B-VPLS service connecting information and to subsequently generate the Service Access Point (SAP) within the PE router to connect the LAN to the VPN.

The connecting information may comprise a B-VPLS identifier (ID) of the B-VPLS service instance the I-VPLS service to be deployed has to connect to. It may further comprise a B-VPLS service maximum transmission unit (MTU). This information is required to allow the I-VPLS service to make use of the VPLS backbone.

In some cases, a suitable VPLS service may not be found on the PE router or on another PE router. The cloud management system may be configured to issue a warning in those situations. For instance, the cloud management system may be configured to issue a warning, such as an error message to an operator, when a B-VPLS service is found on the PE router and/or when only a B-VPLS service is found on the other PE routers. If the PE router to be used by the LAN comprises a B-VPLS service, the supplied VPLS_ID is evidently erroneous as it refers to a VPLS service of the backbone type. Also, if no I-VPLS services are found, only one or more B-VPLS services, no backbone VPLS service is running. Alternatively or additionally, the cloud management system may be configured to issue a warning when no deployment information can be obtained from the another PE router on which a suitable VPLS service was found. This particularly applies in the situation wherein no information can be obtained from a I-VPLS on how to connect to a corresponding B-VPLS service.

According to a second aspect, the present invention provides a method to connect a plurality of LANs to a VPN via corresponding Provider Edge (PE) routers using a layer 2 Virtual Private LAN service (VPLS), to effectively form a single Ethernet LAN. This method comprises each of the plurality of LANs connecting to the VPN network as defined above using the same VPLS_ID.

According to a third aspect, the present invention provides a cloud management system for managing a VPN which is facilitated by an underlying physical network of a SP, wherein the VPN is configured to allow connections with a LAN via a PE router using a layer 2 Virtual Private LAN service. The cloud management system can be configured to implement the method as defined above.

According to a fourth aspect, the present invention provides a cloud management system for managing a VPN which is configured to allow connections with a plurality of LANs via corresponding PE routers using a layer 2 Virtual Private LAN service to effectively form a single Ethernet LAN. Here, the cloud management system can be configured to implement the method for connecting a plurality of LANs as defined above.

According to a fifth aspect, the present invention provides a computer readable medium that comprises instructions, which, when carried out by a processing unit in a cloud management system, implements the method as defined above.

Next, the invention will be described in more detail, referring to the appended drawings, in which:
Figures 1A and 1B illustrate two known VPLS operating models; and

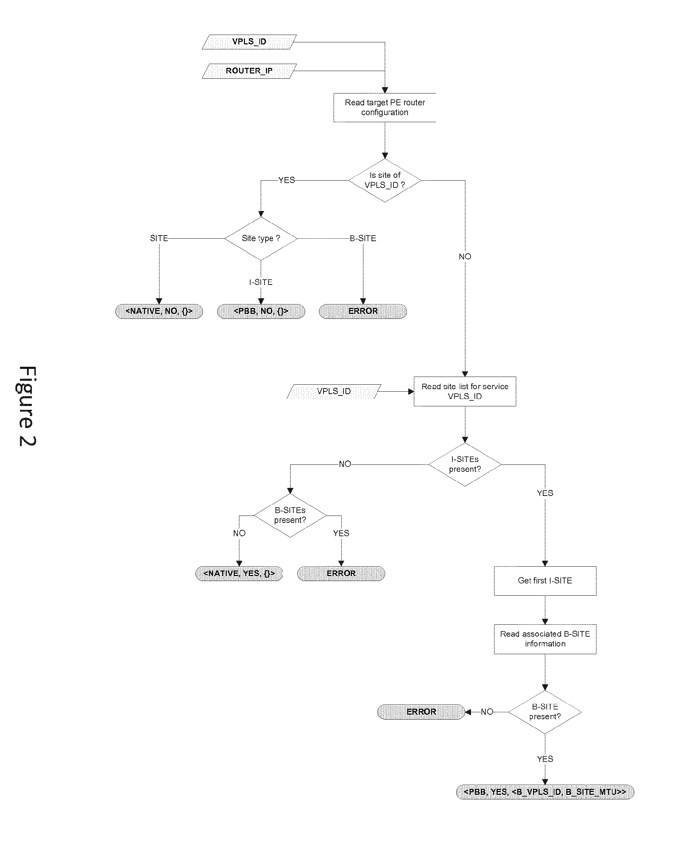

Figure 2 shows a flowchart illustrating the method of the present invention.

In an embodiment of the solution, the customer-side configuration, that is the information supplied from the cloud management system to the LAN or its operator, is composed of the following fields: the VPLS service ID, VPLS_ID, the PE router IP address ROUTER_IP, and VLAN tagging information, such as a <SVID, CVID> pair. It is important to note, that according to the present invention, no information is needed that points to the VPLS operating model, i.e. there is no description indicating the use of a native or PBB VPLS.

For clarity reasons, the following terms are introduced:
SITE = the deployment of a native VPLS service on a specific router;
I-SITE = the deployment of an I-VPLS service on a specific router;
B-SITE = the deployment of a backbone VPLS (B-VPLS) service on a specific router.

According to the present invention, the operating model may be determined by the following algorithm.

First, the cloud management system reads the PE router configuration (directly via SNMP or indirectly via NMS) to determine if the router is a SITE or I-SITE of the service identified by VPLS_ID. The following situations may then occur:
a. If the PE router is a SITE, a native operating model is assumed and the algorithm stops;
b. If the PE router is an I-SITE, the PBB model is assumed and the algorithm stops;
c. if PE router is a B-SITE, stitching cannot occur as the VPLS is of the backbone type and the algorithm ends in error. The cloud management system may issue a corresponding warning or error signal;
d. if no site information is present, the method proceeds to the next step.

In the next step, the cloud management system obtains the list of all PE router deployments (sites) of the VPLS service having the particular VPLS_ID in the network. The following information can be obtained:
a. If at least one I-SITE is present, the PBB model is assumed and the algorithm proceeds to the next step.
b. if no I-SITE is found, but at least one B-SITE is present, stitching cannot occur and the algorithm ends in error.
c. if no I-SITEs and B-SITEs are present in the list, the native operating model is assumed and the algorithm stops.

If at least one I-SITE is present, a PBB operational model is implied, but a corresponding I-VPLS service is not deployed on the target router having the address ROUTER_IP. This requires I-VPLS deployment to be performed on the target router, which in turn requires backbone information in the form of a B-VPLS service ID (B_VPLS_ID) and a maximum transmission unit (MTU) value. To this end, the following sub-steps may be performed:
a. from the I-SITE identified earlier, read the associated B-SITE information;
b. if no B-SITE information is present, the network configuration information is corrupt and the algorithm ends in error;
c. if the B-SITE information is present, the B_VPLS_ID and the B_SITE_MTU are retrieved. B_SITE_MTU gives the I_SITE_MTU required to perform the extension of VPLS_ID on the target router, according to the rule I_SITE_MTU = B_SITE_MTU - 18.

In the case where no I-SITEs and B-SITEs are present in the list, a native VPLS service will be deployed on the PE router.

The output of the method may be a tuple <VPLS_MODE, EXT_REQ, B_VPLS_INFO>, comprising the following fields:
VPLS_MODE = NATIVE | PBB, which identifies the VPLS service operating model;
EXT_REQ = YES | NO, specifies if site extension is needed on the target router;
B_VPLS_INFO = <B_VPLS_ID, B_SITE_MTU> contains the B-VPLS information required for site extension in PBB mode only.

Based on the output presented above, the system can now automatically apply the appropriate steps required to connect the customer LAN to the VPLS service in both native or PBB mode. If needed, the cloud management system may deploy the appropriate service and generate a Service Access Point within the PE router to connect the LAN to the VPN network.

It should be obvious to the skilled person that various modifications can be implemented to the method and device described in this specification without departing from the scope of the present invention, which is defined by the appended claims.

## Claims

1. A method for connecting a Local Area Network (LAN) to a Virtual Private Network (VPN) via a Provider Edge (PE) router using a layer 2 Virtual Private LAN service (VPLS), the VPN being facilitated by an underlying physical network of a Service Provider (SP) and the VPN being managed by a cloud management system, the method comprising:
the cloud management system providing a list of available VPLS services for connecting said LAN to the VPN along with an address of said PE router, each VPLS service having a different VPLS identifier (VPLS_ID);
choosing a VPLS service from among the list of VPLS services;
the cloud management system determining whether a suitable VPLS service is deployed on the PE router;
if it is determined that a suitable VPLS service is deployed, the cloud management system generating a Service Access Point (SAP) within the PE router to connect the LAN to the VPN network;
if it is determined that a suitable VPLS service is not deployed, the cloud management system obtaining a list of all the VPLS services that are deployed on other PE routers within said underlying physical network of the SP that are associated with the chosen VPLS service;
the cloud management system determining whether a suitable VPLS service is deployed on another PE router based on the obtained list;
if it is determined that a suitable VPLS service is on another PE router, the cloud management system obtaining deployment information from said another PE router, the cloud management system further deploying the suitable VPLS service on the PE router using the deployment information and subsequently generating the Service Access Point (SAP) within the PE router to connect the LAN to the VPN network.

2. The method according to claim 1, wherein the VPN facilitates VPLS services of different types.

3. The method according to claim 2, wherein the network facilitates native and Provider Back Bone (PBB) VPLS services.

4. The method according to claim 3, wherein determining that a suitable VPLS service is deployed on the PE router comprises:
determining that an operating model of the VPLS service to be used for connecting the LAN to the VPN is a native operating model when a native VPLS service is deployed on the PE router;
determining that an operating model of the VPLS service to be used for connecting the LAN to the VPN is a PBB operating model when an I-VPLS service is deployed on the PE router.

5. The method according to claim 3 or 4, wherein determining whether a suitable VPLS service is deployed on another PE router comprises:
determining that an operating model of the VPLS service to be used for connecting the LAN to the VPN network is a native operating model when no I-VPLS service and no B-VPLS service is deployed on any of the other PE routers, the cloud management system being configured to deploy a native VPLS service on the PE router and to subsequently generate the Service Access Point (SAP) within the PE router to connect the LAN to the VPN network.

6. The method according to claim 3, 4 or 5, wherein determining whether a suitable VPLS service is deployed on another PE router comprises:
determining that an operating model of the VPLS service to be used for connecting the LAN to the VPN is a PBB operating model when an I-VPLS service is deployed on any of the other PE router;
in which case the obtaining of deployment information from the another PE router comprises obtaining information for connecting an I-VPLS service to a B-VPLS service from the I-VPLS service on the another PE router;
the cloud management system being further configured to deploy a I-VPLS service on the PE router using the B-VPLS service connecting information and to subsequently generate the Service Access Point (SAP) within the PE router to connect the LAN to the VPN network.

7. The method according to claim 6, wherein the connecting information comprises a B-VPLS identifier (ID) of the B-VPLS service instance the I-VPLS service to be deployed has to connect to, the connecting information further comprising a B-VPLS service maximum transmission unit (MTU).

8. The method according to any of the previous claim, wherein the cloud management system is configured to issue a warning when a suitable VPLS service has not been found on the PE router or on another PE router.

9. The method according to claim 8, wherein the cloud management system is configured to issue a warning when a B-VPLS service is found on the PE router and/or when only a B-VPLS service is found on the other PE routers.

10. The method according to claim 8, wherein the cloud management system is configure to issue a warning when no deployment information can be obtained from another PE router on which a suitable VPLS service was found.

11. A method to connect a plurality of LANs to a VPN via corresponding Provider Edge (PE) routers using a layer 2 Virtual Private LAN service (VPLS), to effectively form a single Ethernet LAN, the method comprising each of said plurality of LANs connecting to the VPN network in accordance with any of the previous claims using the same VPLS_ID.

12. A cloud management system for managing a Virtual Private Network (VPN) which is facilitated by an underlying physical network of a Service Provider (SP), said VPN being configured to allow connections with a Local Area Network (LAN) via a Provider Edge (PE) router using a layer 2 Virtual Private LAN service (VPLS), the cloud management system being configured to:
provide a list of available VPLS services for connecting said LAD to the VPN network along with an address of said PE router, each VPLS service having a different VPLS identifier (VPLS_ID), and to then determine whether a suitable VPLS service is deployed on the PE router;
the cloud management system being further configured to, if it is determined that a suitable VPLS service is deployed:
generate a Service Access Point (SAP) within the PE router to connect the LAN to the VPN network; and
the cloud management system being further configured to, if it is determined that a suitable VPLS service is not deployed:
obtain a list of all the VPLS services that are deployed on other PE routers within said underlying physical network of the SP that are associated with the chosen VPLS service;
determine whether a suitable VPLS service is deployed on another PE router based on the obtained list;
obtain deployment information from said another PE router if it is determined that a suitable VPLS service is on another PE router;
deploy the suitable VPLS service on the PE router using the deployment information and to subsequently generate the Service Access Point (SAP) within the PE router to connect the LAN to the VPN network.

13. A cloud management system for managing a VPN which is facilitated by an underlying physical network of a Service Provider SP, said VPN being configured to allow connections with a plurality of LANs via corresponding PE routers using a layer 2 Virtual Private LAN service VPLS, to effectively form a single Ethernet LAN, wherein the cloud management system is configured to connect each of said plurality of LANs to the VPN using the same VPLS_ID as defined in claim 12.

14. A computer readable medium comprising instructions, which, when carried out by a processing unit in a cloud management system, implements the method as defined in any of the claims 1-11.
